# EUROPÄISCHE PATENTSCHRIFT

(11) **EP 0 700 262 B1**
(45) Veröffentlichungstag und Bekanntmachung des Hinweises auf die Patenterteilung: **04.12.1996**
(21) Anmeldenummer: 94920964.7
(22) Anmeldetag: 21.06.1994
(51) Int. Cl.: A47J 43/07

(54) **ARBEITSBEHÄLTER FÜR EINE ELEKTRISCH BETRIEBENE HAUSHALTSKÜCHENMASCHINE**
WORKING CHAMBER FOR AN ELECTRICALLY OPERATED DOMESTIC KITCHEN APPLIANCE
CHAMBRE DE TRAVAIL POUR UN APPAREIL ELECTROMENAGER

(30) Priorität: 05.07.1993 DE 4322280
(43) Veröffentlichungstag der Anmeldung: 13.03.1996
(73) Patentinhaber: Braun Aktiengesellschaft, 60326 Frankfurt am Main (DE)
(72) Erfinder: REBORDOSA, Antonio, E-08240 Manresa (Barcelona) (ES)
(86) Internationale Anmeldenummer: EP9402018
(87) Internationale Veröffentlichungsnummer: WO9501746

(56) Entgegenhaltungen:
- DE-A- 2 850 724
- PATENT ABSTRACTS OF JAPAN vol. 015, no. 092 (C-0811) 6. März 1991 & JP,A,02 307 545 (UBE IND LTD) 20. Dezember 1990
- DATABASE WPI Section Ch, Derwent Publications Ltd., London, GB; Class M24, AN 71-56650S & SU,A,281 508 (CASTING PROBLEMS INST)

## Beschreibung

Die Erfindung betrifft einen Arbeitsbehälter für eine elektrisch betriebene Haushaltsküchenmaschine, in dem unter anderem auch ein relativ schnell drehendes, messerartiges Arbeitswerkzeug rotierbar angeordnet ist, wobei mindestens ein Ende des betreffenden Arbeitswerkzeuges bei dessen Rotation stets nahe an der Innenwandung des Arbeitsbehälters entlang geführt wird.

Ein derartiger Arbeitsbehälter für eine elektrisch betriebene Haushaltsküchenmaschine ist bereits aus der DE-28 50 724 C2 bekannt. Dieser Arbeitsbehälter weist an der Innenwandung in den Innenraum hervorstehende Rippen auf, die beim Gebrauch der Küchenmaschine zur besseren und schnelleren Zerkleinerung der Nahrungsmittel dienen. Im Betrieb werden dabei die Nahrungsmittel durch das rotierende Messer zerkleinert und gegen die Rippen geschleudert, wo sie abgebremst und wieder zum Messer zurückgeschleudert und erneut von diesem zerkleinert werden. Allerdings wird aufgrund der Rippen die Herstellung und die Reinigung des Arbeitsbehälters erheblich erschwert.

Aufgabe der Erfindung ist es daher, einen Arbeitsbehälter der eingangs beschriebenen Art dahingehend zu verbessern, daß in ihm die Nahrungsmittel in kürzester Zeit durch ein rotierendes Arbeitswerkzeug zerkleinert bzw. bearbeitet werden können, daß der Arbeitsbehälter leicht herstellbar und nach seinem Betrieb von Hand leicht reinigbar ist.

Diese Aufgabe wird erfindungsgemäß dadurch gelöst, daß der Querschnitt der Innenwand des Arbeitsbehälters die Form eines mindestens fünf Seiten aufweisenden, im wesentlichen regelmäßigen Polygons aufweist und daß die Rotationsachse des betreffenden Arbeitswerkzeuges im Mittelpunkt des zum jeweiligen Polygon gehörenden Umkreises liegt. Dadurch, daß die Innenwand des Arbeitsbehälters von einem im wesentlichen regelmäßigen Polygon, d.h., alle Seiten sind etwa gleichmäßig lang, gebildet wird, werden die Nahrungsmittel, insbesondere bei der Verwendung eines rotierenden Schneidmessers, in dem Arbeitsbehälter besonders schnell zerkleinert. Denn nach Aufprall der Nahrungsmittel an der Innenwandung werden diese durch das Vieleckprofil von der Innenwandung zurück zum Messer geschleudert, so daß das Messer die Nahrungsmittel neu erfaßt und wiederum zerkleinert. Dieser Vorgang wiederholt sich in kürzester Zeit mehrmals, so daß bereits nach kurzer Einschaltdauer der Haushaltsküchenmaschine die Nahrungsmittel gleichmäßig gut zerkleinert sind. Ein derartig ausgebildeter Behälter ist aber auch beispielsweise beim Kneten von Teig von Vorteil, da der Teig innenseitig von dem rotierenden Knethaken und außenseitig durch die Vieleckausbildung der Innenwand besser durchgewalkt wird. Im Sinne der Erfindung ist es auch durchaus denkbar, daß die Selten des Vielecks untereinander unterschiedlich lang sind.

Der Arbeitsbehälter nach der Erfindung läßt sich besonders einfach herstellen und reinigen, da er keine scharfkantigen Ecken und Vorsprünge aufweist, die aufwendige Spritzwerkzeuge zum Herstellen des Arbeitsbehälters erforderlich machen würden. Durch die polygonartige Ausbildung der Behälterwandung werden die Nahrungsmittel zunächst in die einzelnen Ecken und von dort wieder, beschleunigt über die geraden Verbindungsflächen dem Arbeitswerkzeug rasch zugeführt, so daß eine wesentlich intensivere Bearbeitung der Nahrungsmittel ohne aufwendige Formgestaltung des Arbeitsbehälters möglich wird.

Um einen Arbeitsbehälter zu schaffen, dessen Wandstärke über den gesamten Umfang nahezu gleich dick ist, wird in einer Weiterbildung der Erfindung vorgesehen, daß die Außenwand in geringem Abstand und parallel zur Innenwand verläuft. Bei einem derartigen Arbeitsbehälter werden die Materialkosten besonders gering gehalten.

Es ist aber auch denkbar, daß der Querschnitt der Außenwand von einem Kreis gebildet wird, dessen Mittelpunkt auf dem Mittelpunkt des Umkreises liegt und dessen Durchmesser geringfügig größer ist als der Durchmesser des Umkreises. Bei einem derartigen Arbeitsbehälter ändert sich die Dicke der Wandung des Arbeitsbehälters ständig, wobei die dünnste Wandstärke stets an den Ecken gebildet wird. Aufgrund der kreisrunden Außenfläche der Wandung des Arbeitsbehälters ergibt sich aufgrund der großen Glattflächigkeit eine besonders gute Handhabung.

Besonders vorteilhaft ist es, wenn das Polygon aus fünfzehn Seiten besteht, d.h., verbindet man die Ecken einer Seite mit dem Mittelpunkt des Arbeitsbehälters, so schließen diese beiden Schenkel einen Winkel von etwa 24° ein. Beträgt also, unabhängig vom Durchmesser des Arbeitsbehälters, dieser Winkel für eine Seite 24°, so ergeben sich für den Arbeitsbehälter fünfzehn Seiten, wodurch stets beste Rühr- und Schneidergebnisse erzielt werden.

Ein einziges Ausführungsbeispiel ist in der Zeichnung dargestellt und wird im folgenden näher erläutert.

In der einzigen Figur ist der Arbeitsbehälter 1 in Draufsicht dargestellt und weist eine ringförmige Wandung 2 auf, dessen Innenwandung 3 von einem regelmäßigen Polygon gebildet wird, das im Ausführungsbeispiel aus fünfzehn Seiten 4 besteht, wobei jede Seite 4 so lang bemessen ist, daß ihre Ecken 5, 6, verbunden mit dem Mittelpunkt 20 des Polygons 3 bzw. dem Arbeitsbehälter 1, einen Winkel A von 24° einschließt. Dies ergibt bei fünfzehn Seiten mit den Ecken 5 bis 19 einen Gesamtwinkel von 360°, so daß sich wieder die erste mit der fünfzehnten Seite schließt. Das Polyogn 3 ist von einem Umkreis 21 (strichpunktiert dargestellt) umgeben, der die Ecken 5 bis 19 schneidet. Der Umkreis 21 dient lediglich als Hilfskonstruktion für das Polygon 3.

Das Polygon 3 ist in der Zeichnung von einem weiteren Polygon 22 umgeben, das im Abstand d parallel zum Polygon 3 verläuft und das die Außenwandung 22 des Arbeitsbehälters 1 bildet. Die Außenwandung 22 wird von ebenfalls fünfzehn, parallel zu den Seiten 4 verlaufenden Außenseiten 23 gebildet.

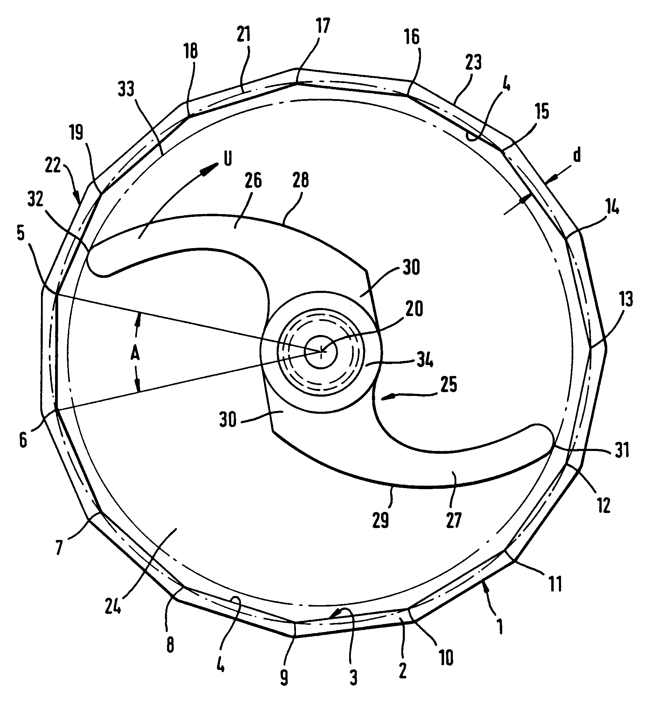

Der Arbeitsbehälter 1 weist einen Boden 24 auf, in dessen Nähe innerhalb des Arbeitsbehälters 1 ein als Messer 25 ausgebildetes Arbeitswerkzeug um den Mittelpunkt 20 des Arbeitsbehälters 1 rotiert. Das Messer 25 besteht aus zwei im wesentlichen diametral gegenüberliegenden Klingen 26, 27, deren Schneiden 28, 29 in Drehrichtung U entgegen dem Uhrzeigersinn und sichelartig verlaufen. Die beiden Klingen 26, 27 sind über ein Mittelstück 20 miteinander verbunden, in dem eine aus Kunststoff hergestellte Nabe 31 befestigt ist. Die Nabe 31 weist eine in der Zeichnung nicht dargestellte Mitnehmervorrichtung auf, die mit einer Antriebswelle (nicht dargestellt) einer Küchenmaschine kuppelbar ist, so wie dies beispielsweise bei den von der Anmelderin hergestellten Küchenmaschinen (siehe hierzu die Braun Programmübersicht, Februar 1993, Seite 35, Abbildung 3 und 4, Seite 38 und Seite 40 sowie Seite 41, zweites Bild, links oben) bekannt ist.

Wie aus der einzigen Figur erkennbar ist, beschreiben die freien Enden 31, 32 der Klingen 27, 26 bei ihrer Rotation einen gedachten Rotationskreis 33, der in geringem und konstantem Abstand zur Innenwandung 3 des Arbeitsbehälters verläuft.

Befinden sich im Arbeitsbehälter 1 Nahrungsmittel, wie Petersilie, Zwiebeln, etc., so werden diese von den Klingen 26, 27 des Messers 25 erfaßt, zerkleinert. Dabei wird infolge der auf die Nahrungsmittel einwirkenden Zentrifugalkräfte ein großer Anteil der Nahrungsmittel gegen die Innenwandung 3 des Arbeitsbehälters 1 geschleudert und in Umfangsrichtung U weiterbewegt, wodurch sie dann in Umfangsrichtung gegen eine der Selten 4 gedrückt werden. Von dort erfahren die Nahrungsmittel gemäß der Erfindung eine Umlenkung, die nicht mehr in Umfangsrichtung, sondern zum Messer 25 hin gerichtet ist. Aufgrund dieser Rückführung der Nahrungsmittel zum Messer werden sie erneut von den Klingen 26, 27 erfaßt, zerkleinert und wieder gegen die Behälterwand geschleudert. Dieser Zerkleinerungsprozeß wiederholt sich in Kürze mehrmals, so daß die Nahrungsmittel besonders wirkungsvoll und schnell zerkleinert werden. Bei Verwendung eines als Arbeitswerkzeug ausgebildeten Knethakens, können auf diese Weise auch Teige besonders intensiv geknetet und gewalkt werden.

## Patentansprüche

1. Arbeitsbehälter (1) für eine elektrisch betriebene Haushaltsküchenmaschine, in dem unter anderem auch ein relativ schnell drehendes, messerartiges Arbeitswerkzeug (25) rotierbar angeordnet ist, wobei mindestens ein Ende des betreffenden Arbeitswerkzeuges (25) bei dessen Rotation stets nahe an der Innenwandung (3) des Arbeitsbehälters (1) entlang geführt wird,
**dadurch gekennzeichnet**,
daß der Querschnitt der Innenwand (3) des Arbeitsbehälters (1) die Form eines mindestens fünf Seiten (4) aufweisenden, im wesentlichen regelmäßigen Polygons aufweist und daß die Rotationsachse des betreffenden Arbeitswerkzeuges (25) im Mittelpunkt (20) des zum jeweiligen Polygon gehörenden Umkreises (21) liegt.

2. Arbeitsbehälter nach Anspruch 1,
**dadurch gekennzeichnet**,
daß die Außenwand (22) in geringem Abstand und parallel zur Innenwand (3) verläuft.

3. Arbeitsbehälter nach Anspruch 1,
**dadurch gekennzeichnet**,
daß der Querschnitt der Außenwand (22) von einem Kreis gebildet wird, dessen Mittelpunkt auf dem Mittelpunkt (20) des Umkreises (21) liegt und dessen Durchmesser geringfügig größer ist, als der Durchmesser des Umkreises (21).

4. Arbeitsbehälter nach Anspruch 1,
**dadurch gekennzeichnet**,
daß das Polygon aus fünfzehn Seiten (4) besteht.

## Claims

1. A working bowl (1) for an electrically powered domestic kitchen appliance, in which, among other tools, also a relatively fast-spinning, blade-like working tool (25) is rotatably arranged, with at least one end of the particular working tool (25) being invariably guided in close proximity to the inner wall (3) of the working bowl (1) as the tool rotates,
**characterized in that** the cross-section of the inner wall (3) of the working bowl (1) takes the form of a substantially regular polygon having at least five sides (4), and that the axis of rotation of the particular working tool (25) lies at the center (20) of the circumcircle (21) of the associated polygon.

2. A working bowl as claimed in claim 1,
**characterized in that** the outer wall (22) extends at a small relative distance and parallel to the inner wall (3).

3. A working bowl as claimed in claim 1,
**characterized in that** the cross-section of the outer wall (22) is formed by a circle whose center lies at the center (20) of the circumcircle (21) and whose diameter is slightly greater than the diameter of the circumcircle (21).

4. A working bowl as claimed in claim 1,
**characterized in that** the polygon is comprised of fifteen sides (4).

## Revendications

1. Cuve de travail (1) pour un appareil ménager de cuisine à moteur électrique, dans lequel, entre autres, un outil travaillant (25) analogue à un couteau, tournant relativement rapidement, est monté rotatif, au moins une extrémité de l'outil travaillant (25) en question circulant toujours à proximité de la paroi intérieure (3) de la cuve de travail (1) dans sa rotation,
caractérisée
en ce que la section de la paroi intérieure (3) de la cuve de travail (1) présente la forme d'un polygone sensiblement régulier comprenant au moins cinq côtés (4), et en ce que l'axe de rotation de l'outil travaillant (25) en question se trouve au centre (20) du cercle circonscrit (21) appartenant au polygone.

2. Cuve de travail selon la revendication 1,
caractérisée
en ce que la paroi extérieure (22) s'étend à petite distance de la paroi intérieure (3) et parallèlement à celle-ci.

3. Cuve de travail selon la revendication 1,
caractérisée
en ce que la section de la paroi extérieure (22) est formée par un cercle dont le centre se trouve sur le centre (20) du cercle circonscrit (21) et dont le diamètre est légèrement plus grand que le diamètre du cercle circonscrit (21).

4. Cuve de travail selon la revendication 1,
caractérisée
en ce que le polygone est composé de quinze côtés (4).
